# EUROPEAN PATENT SPECIFICATION

(11) **EP 2 741 515 B1**
(45) Date of publication and mention of the grant of the patent: **19.02.2020**
(21) Application number: 13194315.1
(22) Date of filing: 25.11.2013
(51) Int. Cl.: H04N 21/431, H04N 21/435, H04N 21/4725, H04N 21/84

(54) **Display apparatus and control method thereof**
Anzeigevorrichtung und Steuerverfahren dafür
Appareil d'affichage et son procédé de commande

(30) Priority: 07.12.2012 KR 20120142032
(43) Date of publication of application: 11.06.2014
(73) Proprietor: Samsung Electronics Co., Ltd., Gyeonggi-do 16677 (KR)
(72) Inventor: Kim, Chi-won, Gyeonggi-do (KR); Pi, Kun-done, Gyeonggi-do (KR)
(74) Representative: Walaski, Jan Filip

(56) References cited:
- EP-A1- 1 898 325
- EP-A1- 2 518 618
- WO-A1-2012/014130
- US-A1- 2009 164 460

## Description

The invention relates to a display apparatus for displaying an image based on an image signal and a control method thereof. More particularly, the exemplary embodiments relate to a display apparatus configured to be easily provided with a service related to a content image that a user is watching, and a control method thereof.

Prior art document EP 2518618 A1 relates to a digital receiver and a method for controlling the same, in which when a user selects some area or such data from a screen, a first process for call and application of a function or information relating to the selected area or data is performed and a second process is carried out according to controlling of the user, such as an action or request of the user for a result of the first process.

A display apparatus processes image signals input from external image sources and displays images based on the image signals on a display panel configured as various forms, such as a liquid crystal display (LCD). A display apparatus available to general users is configured as a TV or a monitor. For example, a display apparatus configured as a TV processes broadcast signals transmitted from a broadcasting station by, for example, tuning and decoding, to display images of a user desired broadcast channel or processes image signals received from a content providing device, connected locally or via a network, to display content images.

A display apparatus not only functions to display an image based on an image signal provided from an outside source, but also receives and provides various kinds of information and data from and to different external devices as well as a network server via connection thereto for two-way communications. Recently, there are an increasing number of service providers that build servers and provide a variety of services to the display apparatus. The display apparatus may be provided with various kinds of services, such as a search service or a video service, via connection through communications to the servers of the service providers.

For example, to utilize a search service using a title of a desired content image, a user first displays an image of the search service provided by a server through a web browser or application. The user then manually inputs a keyword of the title into a search box on the image through an input unit, such as a remote controller of the display apparatus. However, such a series of operations may cause inconvenience to the user and may take a relatively substantial amount of time to obtain a search result.

The foregoing and/or other aspects may be achieved by providing a display apparatus according to claim 1 and a method for controlling a display apparatus according to claim 10.

The display apparatus may further include a user input, wherein the controller may be configured to change a category of the services on display and change any one of the identifiers of the services in the displayed category on display based on a shift instruction received from the user input.

The controller may change the category on display based on one of an up or down instruction and a right or left instruction from the user input and may change the identifier based on the other thereof.

The category of the services related to the content may include at least one of a video on demand (VOD) service, a content search service, a social networking service (SNS), and commerce.

The displayed identifier may include a logo of services provided.

The keyword may be displayed over the content image based on an input through the user input while the content image is being displayed.

The keyword may include a title of the content image.

The controller may obtain at least the keyword from the metadata of the content image.

The communicator may communicate with at least one external device forming a local area communication network, and the controller may obtain user preference information from a record of use of a plurality of content images displayed on the display apparatus over a predetermined period of time and may transmit the user preference information to the external device on a preset cycle so that the external device is provided with the services related to the content, based preference information of the user.

The controller may obtain the user preference information based on a accumulation frequency of metadata of each of the content images.

The metadata of the content image may include at least one of a title of the content image, a genre of the content image, and an actor in the content image.

The changing the identifier of each of the services related to the content on display may include receiving a shift instruction from a user input of the display apparatus; and changing a category of the service on display and changing any one of the identifiers of the services in the displayed category on display, the content based on the received shift instruction.

The changing of the identifier on display based on the received shift instruction may include changing the category on display based on one of an up or down instruction and a right or left instruction from the user input and changing the identifier based on the user input.

The category of the services related to the content may include at least one of a video on demand (VOD) service, a content search service, a social networking service (SNS), and commerce.

The displayed identifier may include a logo of services provided.

The keyword may be displayed over the content image based on an input through the user input while the content image is being displayed.

The keyword may include a title of the content image.

The displaying of the keyword may include obtaining at least the keyword from metadata of the content image.

The control method may further include obtaining user preference information from a record of use a plurality of content images displayed on the display apparatus over a predetermined period of time and transmitting the user preference information to at least one external device, forming a local area communication network along with the display apparatus, on a preset cycle, so that the external device is provided with the services related to the content based on the user preference information.

The obtaining of the user preference information may include obtaining the user preference information based on accumulation frequency of metadata of each of the content images.

The metadata of a content image may include at least one of a title of the content image, a genre of the content image and an actor in the content image.

An aspect of an exemplary embodiment may further provide display apparatus including a communicator configured to communicate with a plurality of servers which respectively provide a plurality of services related to content; and a controller configured to display a keyword related to the content image which is displayed on the display over the content image, changing identifiers of the services related to the content on display based on a preset user input with the keyword being displayed, and being provided with the service related to the content based on the keyword from a server which corresponds to a selected identifier through selective input of the identifiers.

The display apparatus may further include a signal reception configured to receive an image signal.

The display apparatus may further include a signal processor configured to process the image signal received by the signal reception according to a preset image processing process.

The display apparatus may additionally include a display configured to display a content image based on the image signal processed by the signal processor.

The display apparatus may further include a user input, wherein the controller changes a category of the services on the display and changes any one of the identifiers of the services in the displayed category on display based on a shift instruction from the user input.

The display apparatus may further provide for the controller to be configured to change the category on display based on one of an up or down instruction and is configured to change the identifier based on a right or left instruction from the user.

The above and/or other aspects will become apparent and more readily appreciated from the following description of the exemplary embodiments, taken in conjunction with the accompanying drawings, in which:
FIG. 1 is a block diagram illustrating a configuration of a display apparatus according to a first exemplary embodiment.
FIG. 2 illustrates a content image and a keyword displayed on the display apparatus of FIG. 1.
FIGS. 3 and 4 illustrate an identifier of a content related service displayed on the display apparatus of FIG. 1.
FIGS. 5 and 6 illustrate an identifier of a service provider being changed the display on the display apparatus of FIG. 1.
FIG. 7 illustrates a content related service image based on a keyword being displayed on the display apparatus of FIG. 1.
FIG. 8 is a flowchart illustrating a method of controlling the display apparatus of FIG. 1.
FIG. 9 illustrates a local area network system including a display apparatus according to a second exemplary embodiment.
FIG. 10 is a flowchart illustrating a control method of the display apparatus of FIG. 9 and an external device.

Below, exemplary embodiments will be described in detail with reference to accompanying drawings so as to be easily understood by a person having ordinary knowledge in the art. The exemplary embodiments may be embodied in various forms without being limited to the exemplary embodiments set forth herein. Descriptions of well-known parts are omitted for clarity and conciseness, and like reference numerals refer to like elements throughout.

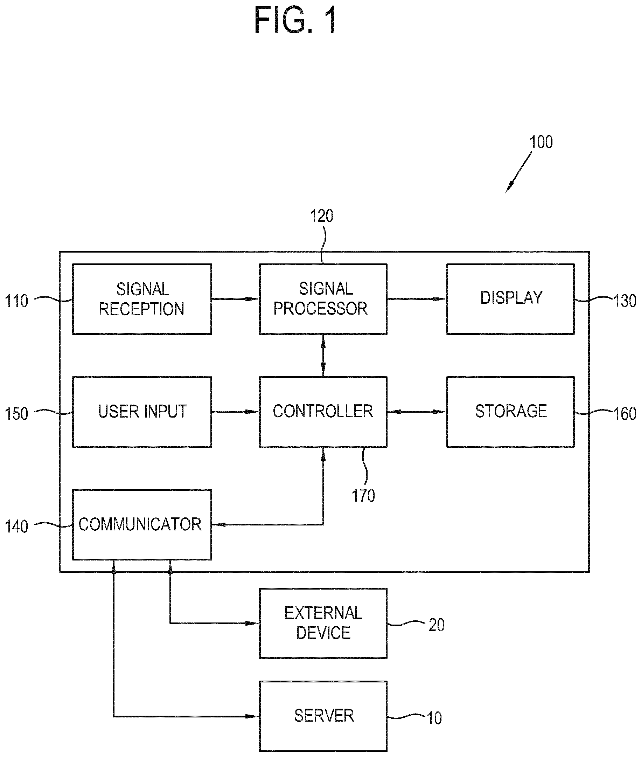

FIG. 1 is a block diagram illustrating a configuration of a display apparatus 100 according to a first exemplary embodiment.

As shown in FIG. 1, the display apparatus 100 according to the exemplary embodiment includes a signal reception 110 configured to receive an image signal from an outside image source (not shown), a signal processor 120 configured to process the image signal received by the signal reception 110 according to a preset image processing process, a display 130 configured to display an image based on the image signal processed by the signal processor 120, interfaces 140 and 150 configured to transmit and receive various signals, data, information, or commands with the display apparatus 100, a storage 160 configured to store various kinds of data information, and a controller 170 configured to control general operations of these components of the display apparatus 100.

The signal reception 110 receives an image signal or image data from an image source (not shown) of a content provider via a cable or wirelessly and transmits the image signal or image data to the signal processor 120. The signal reception unit 110 may be configured as various types of devices based on standards of image signals and configurations of the display apparatus 100. In the exemplary embodiment, the display apparatus 100 is implemented as a TV. When an image signal is a broadcast signal, the signal reception 110 includes a tuner configured to tune the broadcast signal by each channel.

The signal reception 110 may receive an image signal in any method, without being limited to either an analog or digital mode. For example, the signal reception unit 110 may receive a radio frequency (RF) signal transmitted from a broadcasting station or may receive various image signals in accordance with composite video, component video, super video, SCART, high definition multimedia interface (HDMI), DisplayPort, unified display interface (UDI) or wireless HD standards.

The signal processor 120 performs various image processing processes on an image signal transmitted from the signal reception 110. The signal processor 120 outputs a processed image signal to the display 130, thereby displaying an image on the display 130.

The signal processor 120 may perform any kind of image processing, without being limited to, for example, decoding, frame refresh rate conversion, scaling, noise reduction to improve image quality, detail enhancement, or the like. The signal processor 120 may be configured as an image processing board formed by mounting individual chipsets which independently conduct such separate processes or may be formed on an image processing board by an integrated multi-functional system on chip (SOC).

The display 130 displays an image based on an image signal output from the signal processor 120. The display 130 may be configured in various display modes using liquid crystals, plasma, light emitting diodes, organic light emitting diodes, a surface conduction electron emitter, a carbon nano-tube, nano-crystals, or the like.

The display 130 may further include an additional component, depending on a display mode thereof. For example, when a display mode uses liquid crystals, the display 130 may include a liquid crystal display (LCD) panel (not shown), a backlight (not shown) which provides light to the LCE panel, and a panel driving board (not shown) configured to drive the panel.

The interfaces 140 and 150 conduct transmission, reception, or exchange of a signal, data, or information between the display apparatus 100 and, for example, a user, an external device 20, or a server 10 outside the display apparatus 100. The interfaces 140 and 150 include a communicator 140 configured to communicate with the external device 20 or with the server 10 via a local area network or wide area network, according to a preset communication protocol, and a user input 150 which is manipulated by a user and outputs preset information or a preset command which corresponds to a user manipulation to the controller 170.

The communicator 140 performs two-way communication with at least one external device 20 connected locally or via a local area network, or at least one server 10 connected via a wide area network, so as to transmit and receive data. Here, the external device 20 may be implemented as various kinds of electronic devices, for example, a portable media player, a TV, a computer, and a mobile phone.

The user input 150 transmits various control commands preset by user's manipulations and inputs to controller 170, and accordingly the controller 170 conducts a process which corresponds to a command. The user input 150 may be configured as various types of devices, for example, a menu key and an input panel installed on an outside of the display apparatus 100 or as a remote controller separate from the display apparatus 100.

The storage 160 includes a nonvolatile memory which enables reading and writing, such as a flash memory or hard disk drive. The storage 160 is accessed by the controller 170, and data may be read, recorded, revised, deleted or updated by the controller 170.

With this configuration, when the signal reception 110 receives an image signal content provided from the content provider, the signal processor 120 processes the image signal, thereby displaying an image of the content on the display 130.

Apart from the content provider providing content, there is a service provider providing a service which is related to the content. Various kinds of content related services may be provided. For example, the content related services include a video on demand (VOD) service that provides video data related to content so that a user of the display apparatus 100 may view the content at any desired time, a content search service that provides detailed information related to content or relevant information including news, a social networking service (SNS) that includes reviews and opinions of a plurality of users relating to content, and a commerce service enabling the sale/purchase of products.

The service provider is equipped with the server 10 providing such content related services and provides a service which corresponds to a request from the display apparatus 100 connected to the server 10 via communication to the display apparatus 100. The service may be provided by various methods and forms, without being particularly limited.

For example, suppose that the server 10 provides a VOD service. The server 10 includes image data related to various kinds of content and provides a webpage configured to enable retrieval of the included content.

According to a known method, a user executes a web browser or an application on the display apparatus 100 connected to the server 10, via communication, in order to display a webpage image provided by the server 10 and inputs a title of desired content in a keyword box on the webpage image by manipulation of the user input 150. The server 10 retrieves content which corresponds to the input title and transmits image data of the retrieved content to the display apparatus 100. The display apparatus 100 displays an image based on the image data received from the server 10.

Alternatively, when the server 10 provides an SNS service, the server 10 stores data regarding reviews and opinions related to content written by various clients. When a keyword of particular content, for example, a keyword including a title, actor names, or genre of the content, is received, the server 10 retrieves data relevant to the keyword from the stored data and provides the data to the display apparatus 100, to be displayed thereon.

However, in the known method, an operation of displaying a service image for providing a content related service and an operation of manually inputting a keyword on the service image are carried out by the user executing the web browser or application. Thus, the user may be inconvenienced by the manipulation needed to be provided with a service related to desired content through the display apparatus 100.

To overcome such inconvenience, an exemplary embodiment suggests the following method.

While a content image is being displayed on the display 130, the controller 170 displays on the content image a keyword which is relevant to the content image. With the keyword being displayed, the controller 170 changes identifiers of a plurality of content related services on display based on a preset user input. Then, in response to an input for selecting an identifier of one content related service being carried out, the controller 170 is provided with a content related service based on the keyword from the server 10, providing a service which corresponds to the selected identifier.

The keyword related to the content image may be title information related to the content image. The controller 170 may extract title information from metadata of the image signal, and additionally extract a brief description of details of the content image or an index keyword preset in the metadata by the content provider in order to select a keyword related to the content image.

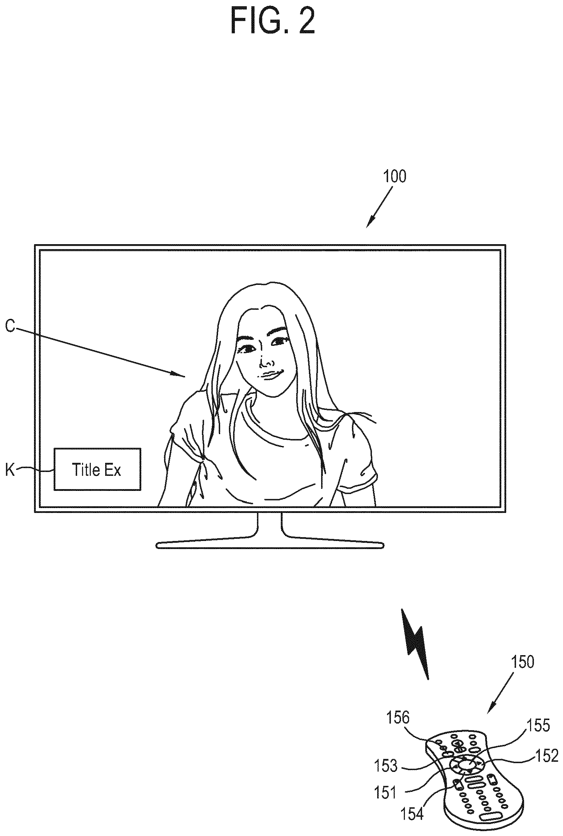

FIG. 2 illustrates a content image C and a keyword K being displayed on the display apparatus 100, according to an exemplary embodiment.

As shown in FIG. 2, the display apparatus 100 displays a content image C of particular content. Meanwhile, the user input 150 is configured as a remote controller of the display apparatus 100, which includes a plurality of buttons 151 to 156 including arrow keys 151, 152, 153, and 154 for up, down, right, and left movement manipulated by the user.

When a preset event occurs with the content image C being displayed, the display apparatus 100 displays a keyword K related to the content image C in order to overlap the content image C. The keyword K may be title information related to the content image C. When a title of the content image C is, for example, "TitleEx," the display apparatus 100 displays such a keyword K.

Here, various events may be used for displaying the keyword K. For example, the event may occur by the user clicking a button 156 on the user input 150. Alternatively, the keyword K may be displayed automatically when the content image C is displayed, or the keyword may not be displayed based on a user manipulation through the user input 150.

As described above, when the user performs a preset manipulation through the user input 150 with the keyword K being displayed, an identifier of the content related service is displayed along with the keyword K.

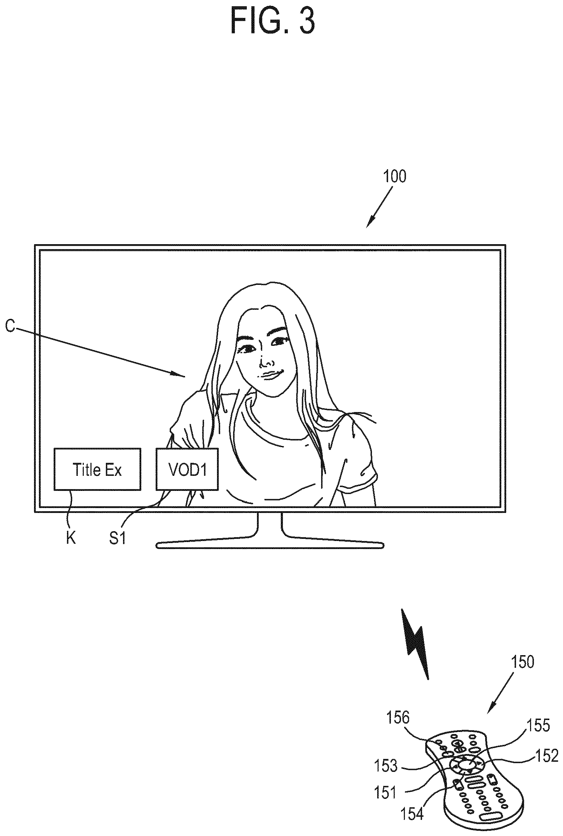

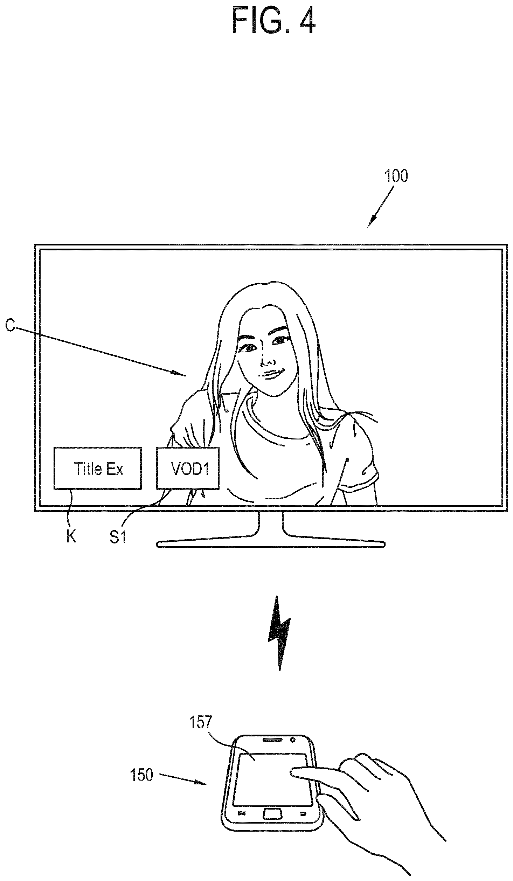

FIGS. 3 and 4 illustrate an identifier Si of a content related service displayed on the display apparatus 100.

As shown in FIG. 3, the display apparatus 100 is displaying the content image C and the keyword K. Here, when the user transmits a shift command through the user input 150, an identifier S1 of the content related service to possibly be provided to the display apparatus 100 is displayed, along with the keyword K.

The content related service may be provided from the server 10 connected to the display apparatus 100 via a network. The content related service may include various services described above, such as a VOD service, a content search service, and an SNS service, each of which has an identifier to distinguish a provider thereof.

A plurality of service providers may be present to provide equivalent or similar services with respect to a content related service. For example, three service providers "VOD1," "VOD2," and "VOD3" provide a VOD service, two services providers "Srch1" and "Srch2" provide a content search service, and three services providers "SNS1," "SNS2," and "SNS3" provide an SNS service.

When the shift command is received with the keyword K being displayed, the display apparatus 100 displays a default, for example, "VOD1," from the identifier Si of the content related service. Here, the service identifier Si may include a service title expressed in a text or a logo of the service.

Here, the shift command may be generated via the arrow keys 151, 152, 153, and 154 of the user input 150.

Alternatively, as shown in FIG. 4, when the user input 150 includes a touch pad 157, the shift command may be generated by a drag motion on the touch pad 157 instead of the four arrow keys 151, 152, 153, and 154.

Also, the identifier Si may be displayed when clicking a preset button on the user input 150 instead of using the shift command.

As described above, while the identifier Si is being displayed on the display apparatus 100, the display apparatus 100 may conduct an operation of changing a category of a content related service on display and an operation of changing the identifier Si of the service provider in a particular category on display which corresponds to a shift instruction, through the user input 150.

For example, when left and right shift instructions are received from the user input 150, the display apparatus changes a service category. Also, when up and down shift instructions are received from the user input 150, the display apparatus 100 changes a service provider in a current category. However, this example is provided for illustrative purposes only. The display apparatus 100 may change a service category based on up and down instructions and may change a service provider in a current category based on right and left instructions.

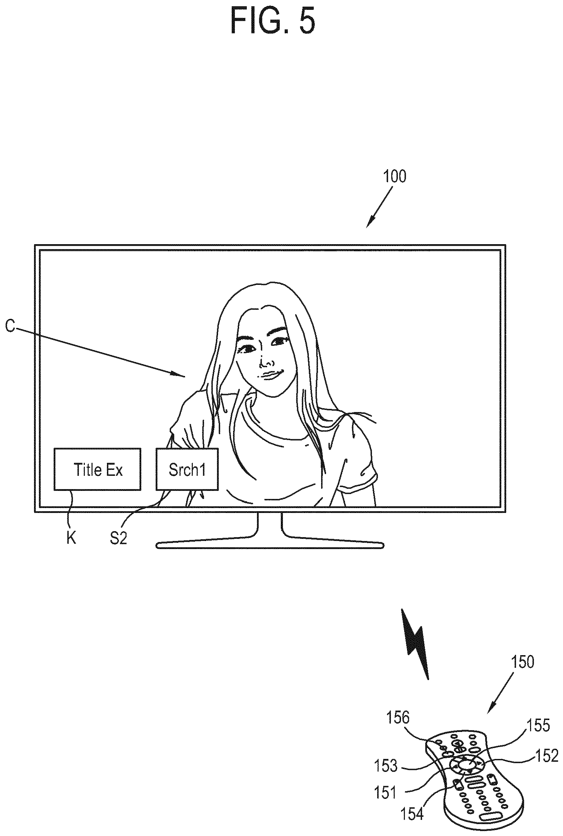

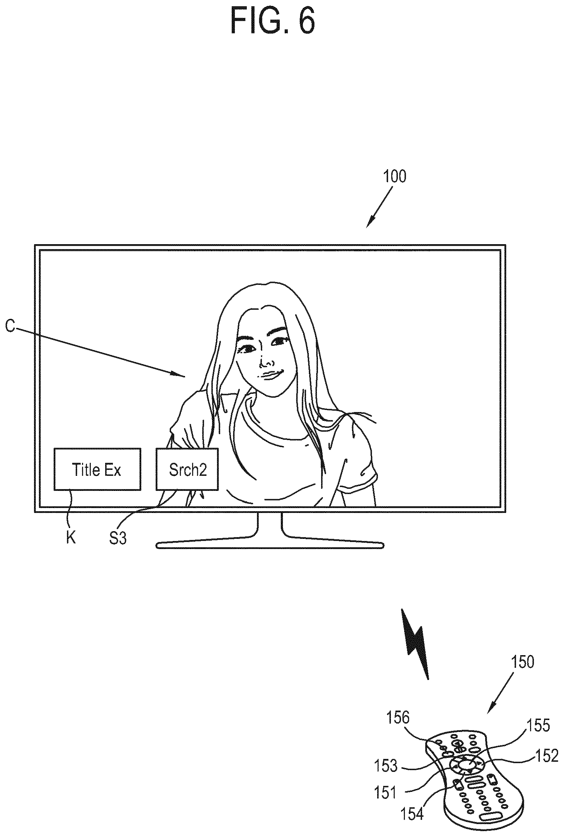

FIGS. 5 and 6 illustrate an identifier of a service provider being changed from S2 to S3 on the display apparatus 100.

In FIG. 4 described above, the display apparatus 100 is displaying the identifier Si of the service provider "VOD1" in a VOD service category. When a right shift instruction is received from the user input 150, the display apparatus 100 changes the VOD service category to a content search service category.

As shown in FIG. 5, the user clicks a right shift button 152 on the user input 150. Accordingly, the display apparatus 100 receives a right shift instruction from the user input 150.

The display apparatus 100 changes the service category from the VOD service to the content search service based on the right shift instruction and changes to "Srch1" as an identifier S2 of a service provider in the content search service category on display.

In this state, when the right shift instruction is received from the user input 150 again, the display apparatus 100 changes the service category to a subsequent SNS service and changes to "SNSi" as an identifier of a service provider in a SNS service category on display.

Alternatively, when a left shift instruction is received from the user input 150 with "Srch1" is being displayed, the display apparatus 100 changes the service category from the content search service back to the VOD service and changes to "VOD1" as an identification of a service provider in the VOD service category.

When up and down shift instructions are received from the user input 150 with "Srch1" as the identifier in the content search service category is being displayed, the display apparatus 100 changes to an identifier of a different service provider in the same service category as the service provider of the identifier S2 on display.

As shown in FIG. 6, when the user clicks an up shift button 153 on the user input 150, an up shift instruction from the user input 150 is output to the display apparatus 100. The display apparatus 100 changes to "Srch2" as an identifier S3 of a next service provider in the service category of the current service provider, that is, the content search service category, on display based on the up shift instruction from the user input 150.

In this state, when the up shift instruction is received again, the display apparatus 100 changes to an identifier of a next service provider on display.

In this way, an identifier of a service provider of a content related service may be displayed which corresponds to a shift instruction from the user input 150.

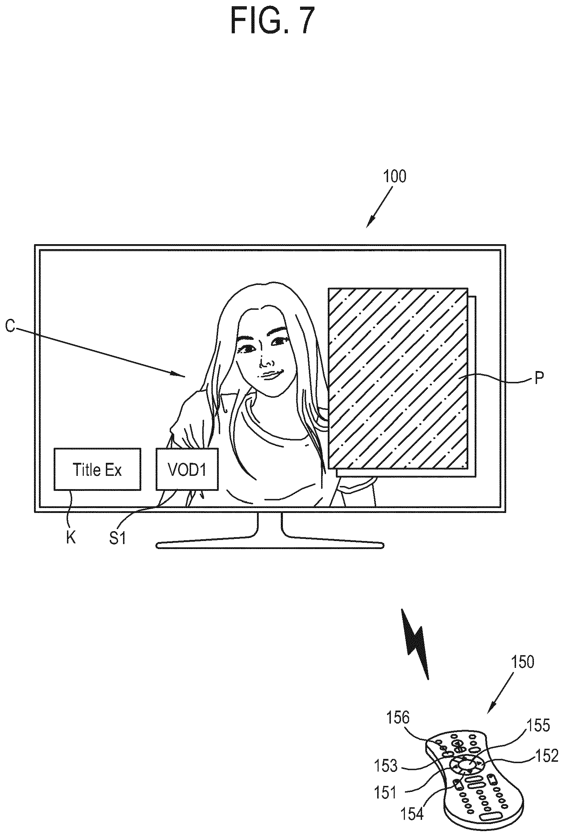

FIG. 7 illustrates a content related service image P based on a keyword K being displayed on the display apparatus 100.

As shown in FIG. 7, while a content image C, a keyword K, and a service identifier Si are displayed on the display apparatus 100, a user clicks a decision/enter button 155 on the user input 150. Accordingly, the user input 150 outputs a decision instruction to the display apparatus 100.

The display apparatus 100 transmits "TitleEx" as information related to the keyword K currently displayed to the server 10, which provides a service of "VOD1" as the identifier Si currently displayed, and requests the server 10 to provide a service based on the information related to the keyword K based on the decision instruction from the user input 150.

The server 10 provides a service image P based on the keyword K in response to the request from the display apparatus 100, and the display apparatus 100 displays the service image P provided from the server 10.

A service based on a keyword K may be provided by various ways based on a method that a service provider provides a service, without being particularly limited. For example, when "TitleEx" as a keyword K is received from the display apparatus 100, the server 10 providing a VOD service may retrieve a video related to "TitleEx" among various video contents stored therein and may provide the retrieved video to be displayed on the display apparatus 100.

Alternatively, when "TitleEx" as a keyword K is received from the display apparatus 100, the server 10 providing a SNS service may provide an image of collected reviews and opinions on "TitleEx" only from among reviews and opinions of a plurality of clients on various contents to be displayed on the display apparatus 100.

The service image P may be displayed by various methods. As shown in FIG. 7, the display apparatus 100 may display the service image P to overlap the content image C.

Alternatively, the display apparatus 100 may split an entire screen of the display 130 and display the content image C in one region and the service image P in another region. Also, the display apparatus 100 may display the service image P instead of the content image C, without displaying the content image C. In addition, the display apparatus 100 may display the service image on the entire screen, covering over the content image C.

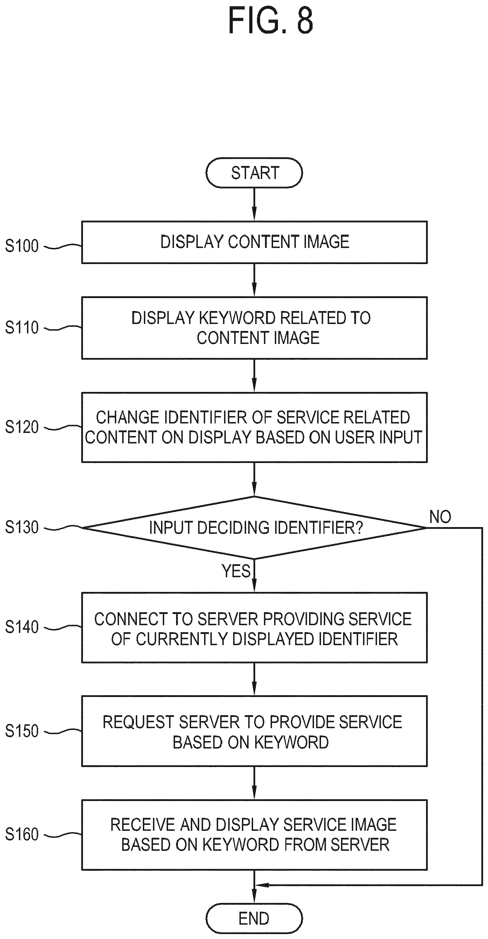

Hereinafter, a method of controlling the display apparatus 100 will be described with reference to FIG. 8.

FIG. 8 is a flowchart illustrating the control method of the display apparatus 100.

As shown in FIG. 8, the display apparatus 100 displays a content image (S100). When a keyword creation event occurs, the display apparatus 100 displays a keyword related to the content image over the content image (S110).

In this state, the display apparatus 100 changes to an identifier of a content related service on display based on a user input (S120).

When an input for selecting a service identifier is made (S130), the display apparatus 100 connects to the server 10 providing a service of the currently displayed identifier (S140). The display apparatus 100 requests the server 10 to provide a service based on the keyword currently being displayed (S150).

The display apparatus 100 receives and displays an image of the service based on the keyword from the server 10 (S160).

According to this process, the display apparatus 100 enables the user to easily be provided with the service related to the content image.

The user may register in a bookmark a keyword related to each content while watching different content images. For example, when a keyword, displayed on the display apparatus 100 while watching a content image, is registered in a bookmark, the display apparatus 100 stores the keyword registered in the bookmark in the storage 160.

Then, when the user inputs an instruction to call the bookmark to the display apparatus 100 through the user input 150, the display apparatus 100 displays the keyword registered in the bookmark so that the user may browse or select the keyword. The user may use the content related service by using the displayed keyword in the bookmark.

Alternatively, the display apparatus 100 may further display a search box for inputting a keyword for retrieval in a service based on a preset input through the user input 150. The user may input the displayed keyword into the search box as is or through a slight modification of the keyword.

As described above, the display apparatus 100 extracts a keyword related to content from a content image. The display apparatus 100 may extract the keyword from metadata related to a content image signal, wherein metadata of one content may include various kinds of information, in addition to a title of the content, for example, a genre of the content, actors or actresses in the content, a production data/release data of the content, and brief/detailed information related to a story of the content.

Such metadata is accumulated over a predetermined time to form a use record, and the display apparatus 100 may obtain information relating to user preferences based on the use record.

For example, the display apparatus 100 may determine as a user favorite genre a genre of highest frequency in an accumulation of frequent metadata with respect to content genres. Alternatively, the display apparatus 100 may determine an actor of highest frequency in an accumulation of frequent information related to actors in content as a user favorite actor. Also, when a content image with a particular title is played back with high frequency, the display apparatus 100 may determine content with the title as user favorite content.

In this way, the information related to the user preferences is obtained based on frequency of metadata on content images accumulated over a predetermined period of time.

The display apparatus 100 provides the information related the user preferences to the content related service and is provided with a recommended service based on the information received from a service provider. For example, when information related to user preference for a movie is provided to the service provider, the display apparatus 100 may be provided with a service specializing in movies from the service provider.

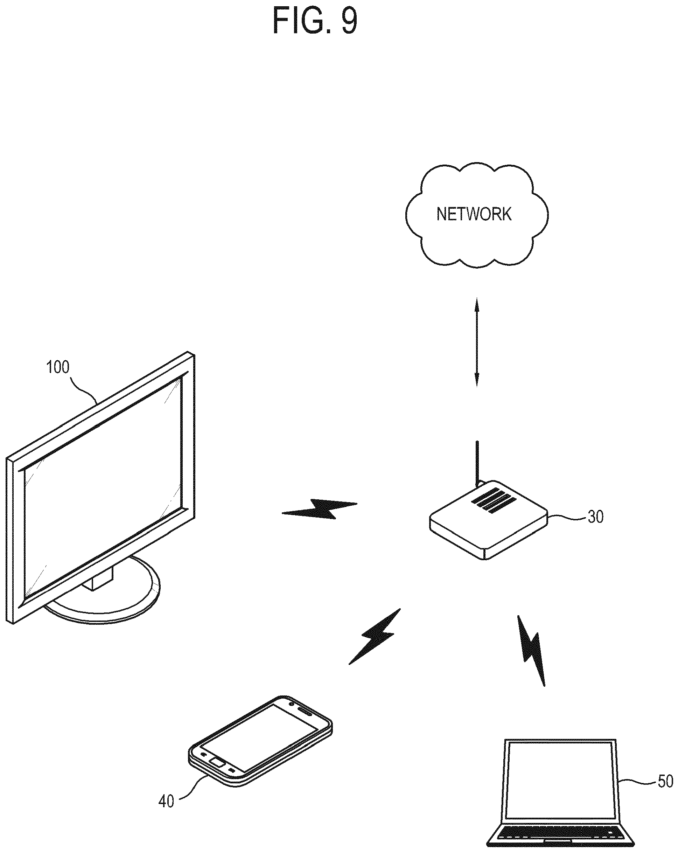

FIG. 9 illustrates a local area network (LAN) system including a display apparatus, according to a second exemplary embodiment.

As shown in FIG. 9, the LAN system includes a gateway 30 connected to an external wide area network and a plurality of electronic devices 40, 50, and 100 connected to the gateway 30 via a cable or wirelessly for communications and communicating with the wide area network through the gateway 30.

In the present embodiment, the LAN system includes the gateway 30, a display apparatus 100, and two external devices 40 and 50, without being limited to the illustrated kinds and number of devices. Further, the external devices 40 and 50 may be configured as various display apparatuses or electronic devices, for example, a mobile phone and a computer. In an exemplary embodiment, the external devices 40 and 50 may be provided with a content related service for use in a similar manner as the display apparatus 100.

As described above, the user may accumulate user preference information through the display apparatus 100 and be provided with a content related service based on the user preference information through the display apparatus 100.

However, in the LAN system, such as a home network, users of the display apparatus 100 and the external devices 40 and 50 may often be the same person or family members having similar tastes or preferences. Thus, in a known method, when the user uses the external devices 40 and 50 while being provided with a service based on the user preference information through the display apparatus 100, the external devices 40 and 50 may not be provided with the service based on the user preference information, unlike the display apparatus 100, thereby causing inconvenience to the user.

Thus, according to an exemplary embodiment, the display apparatus 100 obtains the user preference information from a use record of content images displayed, played back, or executed on the display apparatus 100 over a predetermined period of time and periodically transmits the user preference information to the external devices 40 and 50. Accordingly, the external devices 40 and 50 may be provided with a content related service based on the user preference information, received from the service provider.

The external devices 40 and 50 may be provided with a content related service and may utilize the service by various method based on a configuration of the external devices 40 and 50, for example, the method illustrated with reference to the display apparatus 100 in the foregoing exemplary embodiment.

The use record may be accumulated in the display apparatus 100 over a given period, for example, a period from a point when the display apparatus 100 is used first to a current point, a specified period of time until a current time, for example, one year or two years or a period of time designated by the user.

Also, the display apparatus 100 may transmit the user preference information to the external devices 40 and 50 by various methods. For example, when an application for information exchange is installed on each of the display apparatus 100 and the external devices 40 and 50, an exclusive channel for information transmission is established between the devices with the application installed. Accordingly, the display apparatus 100 may transmit the user preference information to the external devices 40 and 50 having the application installed or activated through the exclusive channel.

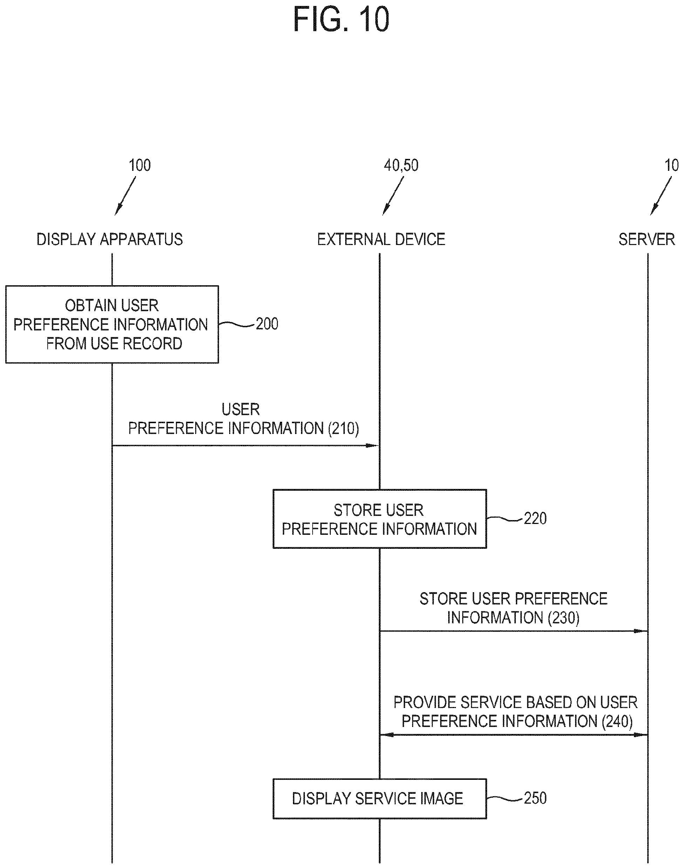

Hereinafter, a method of controlling the display apparatus 100 and the external devices 40 and 50 according to an exemplary embodiment will be described with reference to FIG. 10.

FIG. 10 is a flowchart illustrating the method of controlling the display apparatus 100 and the external devices 40 and 50.

As shown in FIG. 10, the display apparatus 100 obtains user preference information from a use record (200). The display apparatus 100 transmits the user preference information to the external devices 40 and 50 (210).

The external devices 40 and 50 stores the user preference information received from the display apparatus 100 (220). Then, the external devices 40 and 50 provide the stored user preference information to the server 10 when making a request for a service from the server 10 which provides a content related service (230).

The server 10 provides a service based on the user preference information, received from the external devices 40 and 50, to the external devices 40 and 50 (240).

The external devices 40 and 50 display an image of the service provided from the server 10 (250).

According to this process, the user may be provided with the service based on user preferences through the external devices 40 and 50 in the same manner as the display apparatus 100.

Although a few exemplary embodiments have been shown and described, it will be appreciated by those skilled in the art that changes may be made in these exemplary embodiments without departing from the principles of the invention, the scope of which is defined in the appended claims.

## Claims

1. A display apparatus (100) comprising:
a signal reception unit (110) for receiving an image signal of content;
a signal processing unit (120) for processing the image signal received by the signal reception unit according to a preset image processing process;
a display unit (130) for displaying an image based on the image signal processed by the signal processing unit;
a communication unit (140) for communicating with a plurality of servers (10) respectively providing a plurality of services related to the content; and
a controller (170) configured:
to extract a keyword related to the content from the received image signal and to display the keyword on the image displayed on the display unit,
to display a single service identifier corresponding to one of the plurality of services alongside the keyword on the image, wherein the single service identifier comprises an identifier of a service provider within a service category,
to change the displayed service identifier to a different service identifier in response to a first user input received at a user input unit (150), wherein the first user input comprises either a first set of shift instructions or a second set of shift instructions;
the controller (170) being arranged, in response to the first set of shift instructions from the user input unit (150), to change the displayed single service identifier so as to display an identifier of a service provider in a different service category from that currently displayed, and is arranged, in response to the second set of shift instructions from the user input unit (150), to change the displayed single service identifier so as to display an identifier of another service provider in the same service category as that currently displayed,
if a service identifier currently displayed is selected by a second user input, to transmit the keyword through the communication unit to the server which provides the service corresponding to the selected service identifier, and
to be provided with a service related to the content based on the keyword, from the server which corresponds to the selected service identifier.

2. The display apparatus of claim 1, wherein the first set of shift instructions comprises one of an up or down instruction from the user input unit and the second set of shift instructions comprises one of a right or left instruction from the user input unit.

3. The display apparatus of claim 1 or 2, wherein the category of the services related to the content comprises at least one of a video on demand (VOD) service, a content search service, a social networking service (SNS) and commerce.

4. The display apparatus of any one of the preceding claims, wherein the displayed service identifier comprises a logo of the services.

5. The display apparatus of any one of the preceding claims, wherein the keyword is displayed over the image based on an input through the user input unit while the image is being displayed.

6. The display apparatus of any one of the preceding claims, wherein the keyword comprises a title of the image.

7. The display apparatus of any one of the preceding claims, wherein the controller obtains the keyword from metadata of the image.

8. The display apparatus of any one of the preceding claims, wherein the communication unit is arranged to communicate with at least one external device forming a local area communication network, and the controller obtains user preference information from a record of the accumulated metadata extracted from each of the displayed images over a predetermined time and transmits the user preference information to the external device on a preset cycle,
wherein the external device sends the user preference information to the plurality of servers (10) and is provided with services from the servers based on the user preference information.

9. The display apparatus of claim 8, wherein the metadata of the image comprises at least one of a title of the image, a genre of the image and an actor in the image.

10. A control method of a display apparatus (100), the method comprising:
displaying an image;
extracting a keyword related to content in the image and displaying the keyword on the image;
displaying a single service identifier corresponding to one of a plurality of services with the keyword on the image, wherein the single service identifier comprises an identifier of a service provider within a service category;
changing the displayed service identifier to a different service identifier in response to a first user input received at a user input unit (150), wherein the first user input comprises either a first set of shift instructions or a second set of shift instructions;
in response to the first set of shift instructions from the user input unit, changing the displayed single service identifier so as to display an identifier of a service provider in a different service category from that currently displayed, and in response to the second set of shift instructions from the user input unit, changing the displayed single service identifier so as to display an identifier of another service provider in the same service category as that currently displayed;
if a service identifier currently displayed is selected by a second user input, transmitting the keyword to a server (10) which provides the service corresponding to the selected service identifier, and being provided with a service related to the content based on the keyword, from the server which corresponds to the selected service identifier.

## Patentansprüche

1. Anzeigevorrichtung (100), die Folgendes umfasst:
eine Signalempfangseinheit (110) zum Empfangen eines Bildsignals von Inhalt;
eine Signalverarbeitungseinheit (120) zum Verarbeiten des von der Signalempfangseinheit empfangenen Bildsignals gemäß eines voreingestellten Bildverarbeitungsprozesses;
eine Anzeigeeinheit (130) zum Anzeigen eines Bilds basierend auf dem von der Signalverarbeitungseinheit verarbeiteten Bildsignal;
eine Kommunikationseinheit (140) zum Kommunizieren mit einer Vielzahl von Servern (10), die jeweils eine Vielzahl von mit dem Inhalt zusammenhängenden Diensten bereitstellen; und
eine Steuerung (170), die dazu konfiguriert ist:
ein mit dem Inhalt zusammenhängendes Schlüsselwort aus dem empfangenen Bildsignal auszuziehen und das Schlüsselwort auf dem auf der Anzeigeeinheit angezeigten Bild anzuzeigen,
eine einzelne Dienstkennung neben dem Schlüsselwort auf dem Bild anzuzeigen, die einem der Vielzahl von Diensten entspricht, wobei die einzelne Dienstkennung eine Kennung eines Dienstanbieters innerhalb einer Dienstkategorie umfasst,
die angezeigte Dienstkennung als Reaktion auf eine an einer Benutzereingabeeinheit (150)empfangene ersteBenutzereingabe zu einer anderen Dienstkennung zu ändern, wobei die erste Benutzereingabe entweder einen ersten Satz von Verschiebungsanweisungen oder einen zweiten Satz von Verschiebungsanweisungen umfasst;
wobei die Steuerung (170) dazu angeordnet ist, als Reaktion auf den ersten Satz von Verschiebungsanweisungen von der Benutzereingabeeinheit (150), die angezeigte einzelne Dienstkennung zu ändern, um eine Kennung eines Dienstanbieters in einer anderen Dienstkategorie als die aktuell angezeigte anzuzeigen, und dazu angeordnet ist, als Reaktion auf den zweiten Satz von Verschiebungsanweisungen von der Benutzereingabeeinheit (150), die angezeigte einzelne Dienstkennung zu ändern, um eine Kennung eines anderen Dienstanbieters in derselben Dienstkategorie wie die aktuell angezeigte anzuzeigen,
wenn eine aktuell angezeigte Dienstkennung von einer zweiten Benutzereingabe ausgewählt wird, das Schlüsselwort über die Kommunikationseinheit an den Server zu übertragen, der den der ausgewählten Dienstkennung entsprechenden Dienst bereitstellt, und
von dem Server, der der ausgewählten Dienstkennung entspricht, basierend auf dem Schlüsselwort einen mit dem Inhalt zusammenhängenden Dienst bereitgestellt zu bekommen.

2. Anzeigevorrichtung nach Anspruch 1, wobei der erste Satz von Verschiebungsanweisungen eine von einer Auf- und einer Ab-Anweisung von der Benutzereingabeeinheit umfasst und der zweite Satz von Verschiebungsanweisungen eine von einer Rechts- und einer Links-Anweisung von der Benutzereingabeeinheit umfasst.

3. Anzeigevorrichtung nach Anspruch 1 oder 2, wobei die Kategorie der mit dem Inhalt zusammenhängenden Dienste mindestens eines von einem Video-on-Demand(VOD)-Dienst, einem Inhaltssuchdienst, einem sozialen Netzwerkdienst (Social Networking Service, SNS) und Handel umfasst.

4. Anzeigevorrichtung nach einem der vorangehenden Ansprüche, wobei die angezeigte Dienstkennung ein Logo der Dienste umfasst.

5. Anzeigevorrichtung nach einem der vorangehenden Ansprüche, wobei das Schlüsselwort, basierend auf einer Eingabe über die Benutzereingabeeinheit, über dem Bild angezeigt wird, während das Bild angezeigt wird.

6. Anzeigevorrichtung nach einem der vorangehenden Ansprüche, wobei das Schlüsselwort einen Titel des Bilds umfasst.

7. Anzeigevorrichtung nach einem der vorangehenden Ansprüche, wobei die Steuerung das Schlüsselwort aus Metadaten des Bilds erhält.

8. Anzeigevorrichtung nach einem der vorangehenden Ansprüche, wobei die Kommunikationseinheit dazu angeordnet ist, mit mindestens einer externen Vorrichtung zu kommunizieren, sodass ein lokales Kommunikationsnetz gebildet wird, und die Steuerung Informationen über Benutzerpräferenzen von einer Aufzeichnung der angesammelten Metadaten, die über einen vorgegebenen Zeitraum aus jedem der angezeigten Bilder ausgezogen wurden, erhält und die Informationen über Benutzerpräferenzen in einem voreingestellten Zyklus an die externe Vorrichtung überträgt,
wobei die externe Vorrichtung die Informationen über Benutzerpräferenzen zu der Vielzahl von Servern (10) schickt und basierend auf den Informationen über Benutzerpräferenzen Dienste von den Servern bereitgestellt bekommt.

9. Anzeigevorrichtung nach Anspruch 8, wobei die Metadaten des Bilds mindestens eines von einem Titel des Bilds, einer Gattung des Bilds und einem Schauspieler in dem Bild umfassen.

10. Steuerungsverfahren für eine Anzeigevorrichtung (100), wobei das Verfahren Folgendes umfasst:
Anzeigen eines Bilds;
Ausziehen eines mit Inhalt in dem Bild zusammenhängenden Schlüsselworts und Anzeigen des Schlüsselworts auf dem Bild;
Anzeigen einer einzelnen Dienstkennung mit dem Schlüsselwort auf dem Bild, die einem einer Vielzahl von Diensten entspricht, wobei die einzelne Dienstkennung eine Kennung eines Dienstanbieters innerhalb einer Dienstkategorie umfasst;
Ändern der angezeigten Dienstkennung zu einer anderen Dienstkennung, als Reaktion auf eine an einer Benutzereingabeeinheit (150) empfangene erste Benutzereingabe, wobei die erste Benutzereingabe entweder einen ersten Satz von Verschiebungsanweisungen oder einen zweiten Satz von Verschiebungsanweisungen umfasst;
als Reaktion auf den ersten Satz von Verschiebungsanweisungen von der Benutzereingabeeinheit, die angezeigte einzelne Dienstkennung zu ändern, um eine Kennung eines Dienstanbieters in einer anderen Dienstkategorie als die aktuell angezeigte anzuzeigen, und als Reaktion auf den zweiten Satz von Verschiebungsanweisungen von der Benutzereingabeeinheit, die angezeigte einzelne Dienstkennung zu ändern, um eine Kennung eines anderen Dienstanbieters in derselben Dienstkategorie wie die aktuell angezeigte anzuzeigen;
wenn eine aktuell angezeigte Dienstkennung durch eine zweite Benutzereingabe ausgewählt wird, Übertragen des Schlüsselworts an einen Server (10), der den der ausgewählten Dienstkennung entsprechenden Dienst bereitstellt, und Bereitgestellt Bekommen eines mit dem Inhalt zusammenhängenden Diensts von dem Server, der der ausgewählten Dienstkennung entspricht, basierend auf dem Schlüsselwort.

## Revendications

1. Appareil d'affichage (100) comprenant :
une unité de réception de signal (110) pour recevoir un signal d'image de contenu ;
une unité de traitement de signal (120) pour traiter le signal d'image reçu par l'unité de réception de signal en fonction d'un processus de traitement d'image préréglé ;
une unité d'affichage (130) pour afficher une image basée sur le signal d'image traité par l'unité de traitement de signal ;
une unité de communication (140) pour communiquer avec une pluralité de serveurs (10) fournissant respectivement une pluralité de services relatifs au contenu ; et
un contrôleur (170) configuré :
pour extraire un mot-clé lié au contenu à partir du signal d'image reçu et pour afficher le mot-clé sur l'image affichée sur l'unité d'affichage,
pour afficher un identifiant de service individuel correspondant à un service de la pluralité de services en conjonction avec le mot-clé sur l'image, l'identifiant de service individuel comprenant un identifiant d'un fournisseur de services au sein d'une catégorie de services,
pour changer l'identifiant de service affiché à un identifiant de service différent en réaction à une première saisie d'utilisateur reçue au niveau d'une unité de saisie d'utilisateur (150), la première saisie d'utilisateur comprenant soit un premier ensemble d'instructions de déplacement, soit un deuxième ensemble d'instructions de déplacement ;
le contrôleur (170) étant agencé, en réaction au premier ensemble d'instructions de déplacement en provenance de l'unité de saisie d'utilisateur (150), pour changer l'identifiant de service individuel affiché de sorte à afficher un identifiant d'un fournisseur de services dans une catégorie de services différente de celle qui est affichée actuellement, et étant agencé, en réaction au deuxième ensemble d'instructions de déplacement en provenance de l'unité de saisie d'utilisateur (150), pour changer l'identifiant de service individuel affiché de sorte à afficher un identifiant d'un autre fournisseur de services dans la même catégorie de services que celle qui est affichée actuellement,
si un identifiant de service affiché actuellement est sélectionné par une deuxième saisie d'utilisateur, transmettre le mot-clé par l'intermédiaire de l'unité de communication au serveur qui fournit le service correspondant à l'identifiant de service sélectionné ; et
obtenir la fourniture d'un service lié au contenu basé sur le mot-clé, à partir du serveur qui correspond à l'identifiant de service sélectionné.

2. Appareil d'affichage de la revendication 1, dans lequel le premier ensemble d'instructions de déplacement comprend une instruction parmi une instruction vers le haut ou vers le bas en provenance de l'unité de saisie d'utilisateur et le deuxième ensemble d'instructions de déplacement comprend une instruction parmi une instruction vers la droite ou vers la gauche en provenance de l'unité de saisie d'utilisateur.

3. Appareil d'affichage de la revendication 1 ou 2, dans lequel la catégorie des services liée au contenu comprend au moins un service parmi un service de vidéo à la demande (VOD), un service de recherche de contenu, un service de réseautage social (SNS) et de commerce.

4. Appareil d'affichage de l'une quelconque des revendications précédentes, dans lequel l'identifiant de service affiché comprend un logo des services.

5. Appareil d'affichage de l'une quelconque des revendications précédentes, dans lequel le mot-clé est affiché par-dessus l'image sur la base d'une saisie par l'intermédiaire de l'unité de saisie d'utilisateur pendant que l'image est affichée.

6. Appareil d'affichage de l'une quelconque des revendications précédentes, dans lequel le mot-clé comprend un titre de l'image.

7. Appareil d'affichage de l'une quelconque des revendications précédentes, dans lequel le contrôleur obtient le mot-clé à partir de métadonnées de l'image.

8. Appareil d'affichage de l'une quelconque des revendications précédentes, dans lequel l'unité de communication est agencée pour communiquer avec au moins un dispositif externe formant un réseau de communication local, et le contrôleur obtient des informations de préférence d'utilisateur à partir d'un enregistrement des métadonnées accumulées extraites à partir de chacune des images affichées sur une durée prédéterminée et transmet les informations de préférence d'utilisateur au dispositif externe suivant un cycle préréglé,
dans lequel le dispositif externe envoie les informations de préférence d'utilisateur à la pluralité de serveurs (10) et obtient la fourniture de services à partir des serveurs sur la base des informations de préférence d'utilisateur.

9. Appareil d'affichage de la revendication 8, dans lequel les métadonnées de l'image comprennent au moins un élément parmi un titre de l'image, un genre de l'image et un acteur dans l'image.

10. Procédé de commande d'un appareil d'affichage (100), le procédé comprenant :
l'affichage d'une image ;
l'extraction d'un mot-clé lié à un contenu dans l'image et l'affichage du mot-clé sur l'image ;
l'affichage d'un identifiant de service individuel correspondant à un service d'une pluralité de services avec le mot-clé sur l'image, l'identifiant de service individuel comprenant un identifiant d'un fournisseur de services au sein d'une catégorie de services ;
le changement de l'identifiant de service affiché à un identifiant de service différent en réaction à une première saisie d'utilisateur reçue au niveau d'une unité de saisie d'utilisateur (150), la première saisie d'utilisateur comprenant soit un premier ensemble d'instructions de déplacement, soit un deuxième ensemble d'instructions de déplacement ;
en réaction au premier ensemble d'instructions de déplacement en provenance de l'unité de saisie d'utilisateur, le changement de l'identifiant de service individuel affiché de sorte à afficher un identifiant d'un fournisseur de services dans une catégorie de services différente de celle qui est affichée actuellement, et en réaction au deuxième ensemble d'instructions de déplacement en provenance de l'unité de saisie d'utilisateur, le changement de l'identifiant de service individuel affiché de sorte à afficher un identifiant d'un autre fournisseur de services dans la même catégorie de services que celle qui est affichée actuellement ;
si un identifiant de service affiché actuellement est sélectionné par une deuxième saisie d'utilisateur, la transmission du mot-clé à un serveur (10) qui fournit le service correspondant à l'identifiant de service sélectionné, et l'obtention de la fourniture d'un service lié au contenu basé sur le mot-clé, à partir du serveur qui correspond à l'identifiant de service sélectionné.
